# EUROPÄISCHE PATENTSCHRIFT

(11) **EP 0 334 160 B1**
(45) Veröffentlichungstag und Bekanntmachung des Hinweises auf die Patenterteilung: **14.04.1993**
(21) Anmeldenummer: 89104459.6
(22) Anmeldetag: 14.03.1989
(51) Int. Cl.: H02P 8/00

(54) **Einrichtung zur Einstellung des Lastwinkels eines elektrischen Schrittmotors**
Device for load angle adjustment of an electric stepper motor
Dispositif pour ajuster l'angle de charge d'un moteur pas à pas

(30) Priorität: 23.03.1988 DE 3809657
(43) Veröffentlichungstag der Anmeldung: 27.09.1989
(73) Patentinhaber: Gerhard Berger GmbH & Co. KG Fabrik elektrischer Geräte, D-77933 Lahr (DE)
(72) Erfinder: Baur, Reinhard, D-7634 Kippenheim 2 (DE)
(74) Vertreter: Patent- und Rechtsanwaltssozietät, Schmitt, Maucher & Börjes

(56) Entgegenhaltungen:
- EP-A- 0 143 241
- DE-A- 3 441 451

## Beschreibung

Die Erfindung betrifft eine Einrichtung zur Einstellung des Lastwinkels eines elektrischen Schrittmotors mit einer Rotor-Lagerückmeldevorrichtung, wobei die Einrichtung einen Schrittimpulsausgang für eine mit dem Motor verbundene Leistungsansteuerung und einen Eingang für eine Lastwinkelvorgabe aufweist sowie ein zugehöriges Betriebsverfahren.

Es sind bereits solche Einrichtungen bekannt, die einen selbstsynchronen Betrieb eines Schrittmotors ermöglichen. Wird bei einer solchen Anordnung ein Startimpuls und somit ein Motorfortschaltimpuls gegeben, so erfolgt über die Rotor-Lagerückmeldevorrichtung erst dann ein Rückmeldeimpuls, wenn der Rotor tatsächlich die vorgegebene Position erreicht hat.
Um den Motor zu beschleunigen oder ihn abzubremsen ist es bereits bekannt, eine sogenannte Pulsinjektion vorzusehen, wobei zwischen die Motorfortschaltimpulse Zusatzimpulse eingebracht oder aber ausgeblendet werden. Problematisch ist hierbei jedoch, daß bei einer Pulsinjektion durch das frühere Umschalten auf einen nächsten Erregungszustand die Gefahr besteht, den zulässigen Lastwinkel und Frequenzbereich zu überschreiten. Aus diesem Grunde sind auch Zeitverzögerungen vorgesehen, welche den Zusatzimpuls um einen Halbschritt verzögern. Daraus wird erkennbar, daß es Schwierigkeiten bereitet, einen oder mehrere zusätzliche Impulse in eine vorhandene Impulskette einzuflechten. Dabei dürfen die von der Lagerückmeldung kommenden Impulse nur eine der halben maximalen Betriebsfrequenz des Motors entsprechende Frequenz aufweisen, da über die Lastwinkelsollwert-Eingabe noch zusätzliche Impulse injiziert werden können. Dies bedeutet aber eine Einschränkung des Betriebsbereiches des Motors.
Zur Erhöhung der Störsicherheit ist am Eingang der Leistungsansteuerung üblicherweise ein Filter vorgesehen, um Störimpulse abzublocken. Die variable Frequenz der Motorfortschaltimpulse erfordert dabei eine entsprechende Filterauslegung, die aber für eine größtmögliche Störsicherheit nicht optimal ist.

Aufgabe der vorliegenden Erfindung ist es, die vorgenanten Nachteile weitgehend zu vermeiden und insbesondere beim Beschleunigen und Abbremsen des Motors die Möglichkeit des problemlosen Einregelns auf einen optimalen Motorlastwinkel zu haben und somit bei gegebenem Motorstrom und im vollen Schrittmotorfrequenzbereich in Halbschritten immer das maximal mögliche Drehmoment zu erzeugen.

Zur Lösung dieser Aufgabe wird erfindungsgemäß insbesondere vorgeschlagen, daß eine Lastwinkelregelung vorgesehen ist mit einer im Regelkreis angeordneten Lastwinkelmeßeinrichtung und einem daran angeschlossenen Komparator, der den Eingang für die Lastwinkelvorgabe aufweist und mit einem von dem Komparator ein- und ausschaltbaren, auf eine Festfrequenz eingestellten und mit seinem Ausgang an die Lastwinkelmeßeinrichtung und an die Leistungsansteuerung angeschlossenen Pulsgenerator.

Durch diese Anordnung, insbesondere in Verbindung mit dem vorgesehenen Pulsgenerator, können die Motorfortschaltimpulse immer mit gleicher Frequenz entsprechend der maximalen Motor-Betriebsfrequenz abgegeben werden, wobei dies in Form von Einzelimpulsen, von Impulspaketen bis zu einer mit maximaler Frequenz durchlaufenden Impulsfolge ablaufen kann. Praktisch umgekehrt wie bei der bekannten Impulsinjektion wird im vorliegenden Falle von einer mit Maximalfrequenz durchlaufenden, vom Pulsgenerator kommenden Impulskette ausgegangen, wobei aber die Impulsausgabe auf entsprechende Zeitabschnitte zum Reduzieren des anstehenden Lastwinkelfehlers begrenzt wird.

Zusätzliche Ausgestaltungen der Erfindung sind in den Unteransprüchen aufgeführt. Nachstehend ist die Erfindung mit ihren wesentlichen Einzelheiten anhand der Zeichnung noch näher erläutert.

Es zeigt schematisiert:
- Fig. 1: ein Blockschaltbild und
- Fig. 2: ein gegenüber Fig. 1 etwas detaillierteres Blockschaltbild.

Eine im ganzen mit 1 bezeichnete Einrichtung zur Einstellung des Lastwinkels eines elektrischen Schrittmotors 2 weist, ausgehend von einem mit dem Schrittmotor 2 verbundenen Encoder 3 als Rotor-Lagerückmeldevorrichtung, eine damit verbundene Lastwinkelmeßeinrichtung 4, einen Komparator 5 sowie einen Pulsgenerator 6 auf. Am Ausgang 7 des Pulsgenerators 6 ist eine mit dem Motor 2 verbundene Leistungsansteuerung 8 angeschlossen.

Der Komparator 5 weist einen ersten Eingang 9 zur Eingabe des Lastwinkel-Sollwertes und einen weiteren, mit der Lastwinkelmeßeinrichtung 4 verbundenen Eingang 10 für den Lastwinkel-Istwert auf. Der Ausgang 11 des Komparators 5 ist an den Pulsgenerator 6 angeschlossen. Dieser Pulsgenerator 6 ist auf eine Festfrequenz, insbesondere die maximale Betriebsfrequenz des jeweiligen Motors eingestellt und läßt sich mit Hilfe des Komparators für bestimmte Zeitabschnitte einschalten.

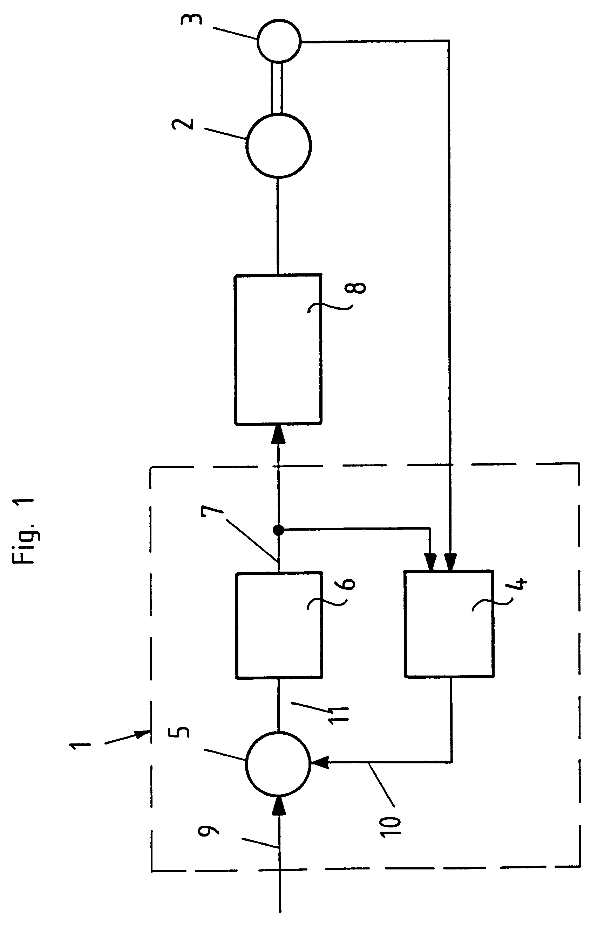

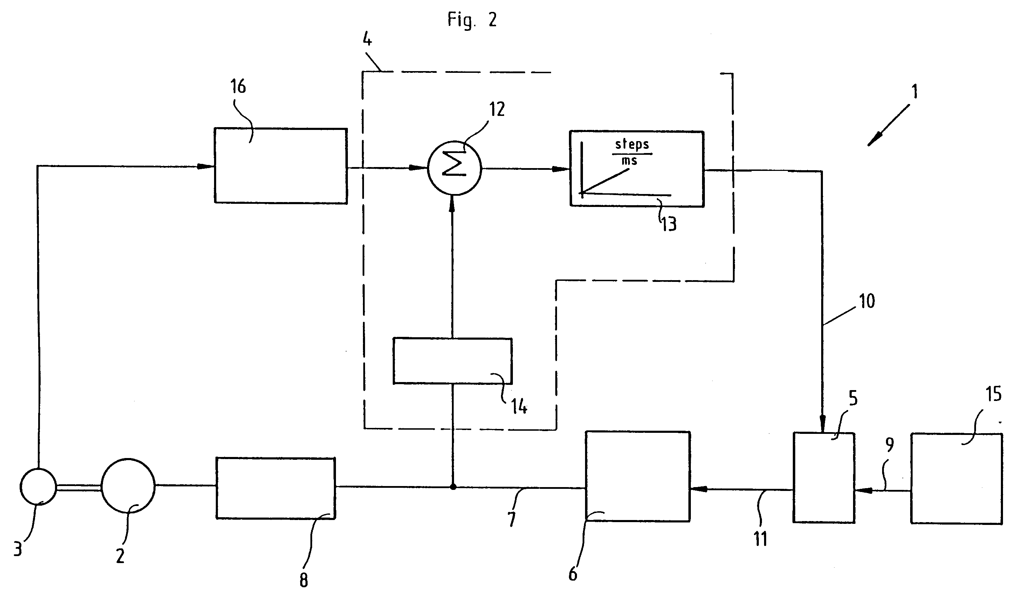

Fig. 2 zeigt die wesentlichen Komponenten der Lastwinkel-Meßeinrichtung 4. Sie enthält eine Pulsdifferenzerfassung 12, einen an diese angeschlossenen Zähler 13 und gegebenenfalls noch eine Pulsanpassung 14.
In dem in Fig. 1 und 2 gezeigten Lastwinkel-Regelkreis ergibt sich folgende Wirkungsweise:
Es wird zunächst angenommen, daß sich der Motor in Ruhelage befindet und der momentane Motorlastwinkel und auch die Lastwinkelvorgabe 0 sind. Nach diesem Anfangszustand wird über eine Lastwinkelvorgabe 15 (Fig. 2) ein Wert von z. B. 5 Halbschritten vorgegeben. Durch den Komparator 5 wird der momentane Lastwinkelfehler von fünf Halbschritten erfaßt und mit seinem Ausgang 11 schaltet er den Pulsgenerator 6 ein. Dessen Ausgang 7 liefert Ausgangsimpulse mit einer Ausgangsfrequenz von beispielsweise 100 kHz, was der maximalen Betriebsfrequenz eines bestimmten Schrittmotors entsprechen soll. Die Ausgangsimpulse werden direkt an die Leistungsansteuerung 8 weitergegeben und gleichzeitig auch über die Pulsanpassung 14 an die Pulsdifferenzerfassung 12. Das sich an dessen Ausgang bildende Differenzsignal aus der Encoderauswertung 16 und dem Pulsgenerator 6 steuert einen Zähler 13, wobei der Zählerinhalt die Differenz zwischen der Vorgabe des Pulsstromes an der Leistungsansteuerung 8 und der tatsächlichen Stellung des Rotors wiedergibt. Dies entspricht dem Lastwinkel-Istwert, der an den Komparator 5 weitergegeben wird. Unter der Annahme, daß sich der Motor, bedingt durch seine Trägheit, noch nicht bewegen konnte, besitzt nun der Motor nach Ausgabe des ersten Pulses vom ein- und ausschaltbaren Pulsgenerator 6 einen Lastwinkel von einem Halbschritt und der Lastwinkelfehler beträgt jetzt nur noch vier Halbschritte. Dieser Vorgang setzt sich fort, bis der Motorlastwinkel mit der Lastwinkelvorgabe identisch ist, das heißt, bis kein Lastwinkelfehler mehr vorliegt.
Wird nun die Motorträgheit überwunden und von der Encoderauswertung 16 ein Schritt gemeldet, so entspricht dies einem ausgeführten Motorschritt. Der Motorlastwinkel hat sich nun dementsprechend reduziert, jedoch wird dieser Reduzierung über den Lastwinkelvergleich des Komporators 5 entgegengewirkt, so daß im Betriebsfalle nach einer kurzen Einstellzeit der Motor den Lastwinkel der Vorgabe aufweist. Durch diese Lastwinkelregelung kann der Schrittmotor nicht mehr ausrasten und immer das maximal mögliche Motordrehmoment erzeugen.

Durch die völlig asynchrone Verarbeitung der von der Encoderauswertung 16 und der vom Pulsgenerator 6 erzeugten Schritte in der Pulsdifferenzerfassung 12 innerhalb einer halben Periode der Pulsgeneratorausgangsfrequenz, kann innerhalb des gesamten Schrittmotorarbeitsfrequenzbereiches unmittelbar auf einen neuen Lastwinkel eingeregelt werden. Der Übergang zum neuen Lastwinkel erfolgt ohne Pulslücke, d. h. ohne Abschaltung des Pulsgenerators 6, bis der geforderte Wert erreicht ist. Daraus, resultiert, daß selbst bei sehr hohen Drehzahlen des Schrittmotors 2 ein der Drehrichtung entgegengesetztes Moment aufgebaut werden kann, um den Motor maximal schnell abzubremsen und dann in entgegengesetzter Richtung zu beschleunigen.

Die in Fig. 1 und 2 gezeigte Einrichtung ist mit einer übergeordneten, hier nicht dargestellten Steuerung verbunden, welche den optimalen Motorlastwinkel als Funktion der Motordrehzahl ermittelt und diesen an den Lastwinkelregler delegiert, so daß man in jedem Motorfrequenzbereich das maximal mögliche Motordrehmoment erreichen kann.

Zusammengefaßt ergibt sich, daß bei der Schaltung nach dem Ausführungsbeispiel am Eingang 9 eine Lastwinkelsollgröße in binärer Form vorgegeben wird. Dieser Lastwinkel wird von der Schaltung unter allen Umständen eingehalten. Es besteht ein streng linearer Zusammenhang zwischen der Soll-Größe 9 und der Ist-Größe 10 des Lastwinkels. Die Schaltung ist somit als reiner Kommutator verwendbar. Bei dieser Schaltung erfolgt die Erzeugung einer genauen Anzahl von Pulsen am Oszillatorausgang 7, die in linearem Zusammenhang zum Lastwinkel-Sollwert 9 stehen, so daß, wie bereits vorerwähnt, die Schaltung auch die Aufgabe als Kommutator erfüllt.

## Patentansprüche

1. Einrichtung zur Einstellung des Lastwinkels eines elektrischen Schrittmotors (2) mit einer Rotor-Lagerückmeldevorrichtung (3), wobei die Einrichtung einen Schrittimpulsausgang (7) für eine mit dem Motor verbundene Leistungsansteuerung (8) und einen Eingang (9) für eine Lastwinkelvorgabe aufweist, **dadurch gekennzeichnet,** daß eine Lastwinkelregelung vorgesehen ist mit einer im Regelkreis angeordneten Lastwinkelmeßeinrichtung (4) und einem daran angeschlossenen Komparator (5), der den Eingang (9) für die Lastwinkelvorgabe aufweist und mit einem von dem Komparator (5) ein- und ausschaltbaren, auf eine Festfrequenz eingestellten und mit seinem Ausgang (7) an die Lastwinkelmeßeinrichtung (4) sowie an die Leistungsansteuerung (8) angeschlossenen Pulsgenerator (6).

2. Einrichtung nach Anspruch 1, dadurch gekennzeichnet, daß die Arbeitsfrequenz des Pulsgenerators (6) der maximalen Betriebsfrequenz des Schrittmotors (2) entspricht.

3. Einrichtung nach Anspruch 1 oder 2, dadurch gekennzeichnet, daß die Arbeitsgeschwindigkeit der Lastwinkelmeßeinrichtung (4) zur Verarbeitung von neuen Ereignissen, insbesondere von Lastwinkeländerungen gleich oder kleiner als die halbe Periodendauer der Festfrequenz des Pulsgenerators (6) ist.

4. Einrichtung nach einem oder mehreren der Ansprüche 1 bis 3, dadurch gekennzeichnet, daß die Lastwinkelmeßeinrichtung (4) im wesentlichen eine Pulsdifferenzerfassung (12) mit einem von der Rotor-Lagerückmeldevorrichtung (3) kommenden Eingang und einem von dem Pulsgenerator (6) kommenden weiteren Eingang sowie einen differenzbildenden Ausgang (11) sowie einen an diesen Ausgang angeschlossenen Zähler (13) und gegebenenfalls eine zwischen dem Pulsgenerator-Eingang und der Pulsdifferenzerfassung (12) geschaltete Pulsanpassung (14) aufweist.

5. Einrichtung nach einem oder mehreren der Ansprüche 1 bis 4, dadurch gekennzeichnet, daß die Lastwinkelregelung mit einer übergeordneten Steuerung verbunden ist.

6. Verfahren zum Betreiben eines elektrischen Schrittmotors (2) mit variablem Lastwinkel, dadurch gekennzeichnet, daß in Abhängigkeit von einem Lastwinkel-Sollwert und einem Lastwinkel-Istwert Ansteuerimpulse mit konstanter Frequenz erzeugt und daß zum Ausregeln ein mit dem Motor verbundener Leistungsteil (8) sowie eine Lastwinkelmeßeinrichtung (4) angesteuert werden.

7. Verfahren nach Anspruch 6 zum Positionieren eines mit Konstantstrom gespeisten elektrischen Schrittmotors (2), dadurch gekennzeichnet, daß der von einem übergeordneten Lageregler geforderte Lastwinkel zur Drehmomentvariation durch die Einrichtung im gesamten Schrittmotorbetriebsbereich eingestellt und bis zur nächsten Lastwinkelvorgabe durch den Lageregler konstant gehalten wird.

## Claims

1. A device for setting the load angle of an electric stepper motor (2) with a rotor position encoder (3) whereby the device has a step impulse output for a power control connected to the motor and an input for the load angle setting wherein a load angle adjustment is included in a control loop with a load angle measuring device (4) a comparator (5) which has an input (9) for the load angle setting, and a pulse generator (6) which can be switched on and off by the comparator (5) and set to a fixed frequency with its output (7) connected to the load angle measuring device (4) and to the power control (8).

2. A device according to claim 1, wherein the output frequency of the pulse generator (6) corresponds to the maximum operating frequency of the stepper motor.

3. A device according to claims 1 or 2 wherein the speed of operation of the load angle measuring device (4) when processing new events, in particular changes in the load angle, is equal to or smaller than half the period of the fixed frequency of the pulse generator (6).

4. A device according to one or more of the claims 1 to 3 wherein the load angle measuring device (4) consists chiefly of a pulse difference register (12) with an input from the rotor position encoder (3), a further input from the pulse generator (6), and an output, which is the difference between said inputs, connected to a counter (13) and if necessary a pulse modulator (14) between the pulse generator input and the pulse difference register.

5. A device according to one or more of the claims 1 to 4 wherein the load angle adjustment is connected to a higher ranking controller.

6. A system for operating an electric stepper motor (2) with variable load angle wherein dependent on a load angle setting and a measured value of the load angle control pulses of constant frequency are produced and transmitted to a power supply (8) connected to the motor and to a load angle measuring device (4).

7. A system according to claim 6 to position an electric stepper motor supplied with constant current wherein the load angle demanded by a higher ranking position regulator in order to vary the torque over the entire operating range of the motor is adjusted and maintained constant until it is next reset by said position regulator.

## Revendications

1. Dispositif de réglage de l'angle de charge d'un moteur pas-à-pas électrique (2), comprenant un dispositif de retour d'information de position de rotor (3), le dispositif présentant une sortie d'impulsions de pas (7) pour une commande de puissance (8) reliée au moteur et une entrée (9) pour opérer l'attribution d'un angle de charge, caractérisé en ce qu'est prévue une régulation de l'angle de charge, avec un dispositif de mesure d'angle de charge (4) disposé dans le circuit de régulation et un comparateur (5) lui étant raccordé, qui présente l'entrée (9) pour l'attribution de l'angle de charge et avec un générateur d'impulsions (6), susceptible d'être mis en et hors service par le comparateur (5), réglé à une fréquence fixe et raccordé par sa sortie (7) au dispositif de mesure d'angle de charge (4), ainsi qu'à la commande de puissance (8).

2. Dispositif selon la revendication 1, caractérisé en ce que la fréquence opératoire du générateur d'impulsions (6) correspond à la fréquence opératoire maximale du moteur pas-à-pas (2).

3. Dispositif selon la revendication 1 ou 2, caractérisé en ce que la vitesse opératoire du dispositif de mesure d'angle de charge (4), en vue de traiter de nouveaux résultats, en particulier de fluctuations de l'angle de charge, est égale ou inférieure à la demi-durée de période de la fréquence fixe du générateur d'impulsions (6).

4. Dispositif selon l'une ou plusieurs des revendications 1 à 3, caractérisé en ce que le dispositif de mesure d'angle de charge (4) présente essentiellement une acquisition de différence d'impulsions (12), avec une entrée venant du dispositif de retour d'information de position de rotor (3) et une autre entrée venant du générateur d'impulsions (6), ainsi qu'une sortie (11) de formation de différence et un compteur (13) raccordé à cette sortie et, le cas échéant, une adaptation d'impulsions (14) mise en circuit entre l'entrée du générateur d'impulsions et l'acquisition de la différence d'impulsions (12).

5. Dispositif selon l'une ou plusieurs des revendications 1 à 4, caractérisé en ce que la régulation d'angle de charge est reliée à une commande d'ordre hiérarchiquement supérieur.

6. Procédé de fonctionnement d'un moteur électrique pas-à-pas (2) à angle de charge variable, caractérisé en ce qu'en fonction d'une valeur de consigne d'angle de charge et d'une valeur réelle d'angle de charge, des impulsions de commande sont produites, à fréquence constante, et en ce que, pour opérer la régulation, est opérée une commande d'une partie de puissance (8) reliée au moteur ainsi que d'un dispositif de mesure d'angle de charge (4).

7. Procédé selon la revendication 6, servant à positionner un moteur pas-à-pas électrique (2) alimenté en courant continu, caractérisé en ce que l'angle de charge requis par un régulateur de position d'ordre hiérarchiquement supérieur, en vue d'obtenir la variation du couple de rotation, est réglé au moyen du dispositif, dans l'ensemble de la plage opératoire du moteur pas-à-pas, et maintenu constant, jusqu'à l'attribution suivante d'un angle de charge, venant du régulateur de position.
